# EUROPÄISCHE PATENTANMELDUNG

(11) **EP 3 890 124 A1**
(43) Veröffentlichungstag der Anmeldung: **06.10.2021**
(21) Anmeldenummer: 20168043.6
(22) Anmeldetag: 03.04.2020
(51) Int. Cl.: H01S 1/02

(54) **VERFAHREN UND VORRICHTUNG ZUM ERZEUGEN EINER ELEKTROMAGNETISCHEN NUTZSTRAHLUNG**

(71) Anmelder: Fraunhofer-Gesellschaft zur Förderung der angewandten Forschung e.V., 80686 München (DE); Albert-Ludwigs-Universität Freiburg, 79098 Freiburg (DE)
(72) Erfinder: Tobias Beckmann, 79110 Freiburg (DE); Armin Lambrecht, 79110 Freiburg (DE); Ingo Breunig, 79098 Freiburg (DE); Alexander Bertz, 79110 Freiburg (DE)
(74) Vertreter: WSL Patentanwälte Partnerschaft mbB

(57) **Zusammenfassung**

Die vorliegenden Erfindung betrifft ein Verfahren zum Erzeugen einer elektromagnetischen Nutzstrahlung mit einer Nutzfrequenz mit den Schritten: a) Erzeugen und Abstrahlen einer elektromagnetischen Pumpstrahlung (11) mit einer Pumpfrequenz, b) Einkoppeln der Pumpstrahlung (11) in einen externen optischen Resonator (20) mit einer abstimmbaren Resonanzfrequenz, wobei die Resonanzfrequenz im Wesentlichen zunächst gleich der Pumpfrequenz ist, so dass in dem Resonator (20) eine elektromagnetische Resonatorstrahlung (21) mit der Resonanzfrequenz oszilliert, c) Ändern der Resonanzfrequenz des Resonators (20), so dass die Resonanzfrequenz der im Resonator (20) oszillierenden elektromagnetischen Resonatorstrahlung (21) über eine Abstimmbandbreite geändert wird, wobei die Pumpfrequenz der Änderung der Resonanzfrequenz nicht folgt, und d)Auskoppeln der in dem Resonator (20) oszillierenden elektromagnetischen Resonatorstrahlung (21) als Nutzstrahlung (22) mit einer von der Pumpfrequenz verschiedenen Nutzfrequenz, wobei der Schritt c) zeitlich nach Schritt b) folgt.

## Beschreibung

Die vorliegende Erfindung betrifft ein Verfahren zum Erzeugen einer elektromagnetischen Nutzstrahlung mit einer Nutzfrequenz. Darüber hinaus betrifft die vorliegende Erfindung eine Vorrichtung zum Erzeugen einer elektromagnetischen Nutzstrahlung mit einer Nutzfrequenz.

Strahlungsquellen, die ein gezieltes und reproduzierbares Abstimmen einer Frequenz der abgestrahlten Strahlung erlauben, sind in vielen Bereichen von Wissenschaft und Technik von tragender Bedeutung. Insbesondere in der strahlungsbasierten Messtechnik kommen derartige Verfahren und Vorrichtungen zum Einsatz.

So arbeiten beispielsweise Abstandsmesssysteme wie FMCW-LIDAR oder die digitale Holographie mit Strahlung unterschiedlicher Wellenlänge. Es gibt jedoch auch eine Vielzahl von spektroskopischen Messverfahren, die auf eine gezielte Änderung der Frequenz der verwendeten elektromagnetischen Strahlung angewiesen sind.

Ziel der Strahlungsquellen für derartige Messsysteme ist es, die Frequenz bzw. die Wellenlänge der abgestrahlten elektromagnetischen Strahlung innerhalb eines bestimmten Bereichs weitgehend kontinuierlich und vor allem reproduzierbar zu variieren.

Aus dem Stand der Technik sind bereits verschiedene Möglichkeiten bekannt, die Frequenz bzw. Wellenlänge einer von einer Strahlungsquelle abgestrahlten elektromagnetischen Strahlung zu ändern. Bei Lasern beispielsweise wird der Frequenzbereich, in dem ein abstimmbarer Laser elektromagnetische Strahlung emittiert, durch das Verstärkungsprofil des Lasermediums und durch den Resonator des Lasers bestimmt. Es besteht also die Möglichkeit zumindest das Verstärkungsprofil des Lasermediums oder die optischen Eigenschaften des Resonators anzupassen.

Bei vergleichsweise günstigen Diodenlasersystemen erfolgt das Abstimmen der Frequenz der abgestrahlten elektromagnetischen Strahlung beispielsweise über Temperatur- und Stromregelungen oder entsprechende Strukturen in der Diode selbst. Alternativ ist auch eine Rückkopplung aus einem externen Resonator möglich, um den Diodenlaser auf eine bestimmte auswählbare Frequenz zu stabilisieren.

Bei teureren Festkörper- oder Gaslasersystemen bestehen noch andere Möglichkeiten der Frequenzänderung. So kann beispielsweise in den Resonator ein drehbares Gitter oder Etalon eingebaut werden, wodurch bestimmte Frequenzen selektiert werden, die anschließend zur induzierten Emission im Laserresonator beitragen. Je nach Orientierung des Gitters oder des Etalons werden andere Frequenzen in das Lasermedium zurückgekoppelt, sodass die Frequenz der Laserstrahlung abgestimmt werden kann.

Bei dem Abstimmen des Resonators eines Lasers wird die Bandbreite des auf diese Weise abstimmbaren Frequenzbereichs durch die Breite des Verstärkungsprofils des Lasermediums begrenzt. Um die Frequenz über größere Bereiche abstimmen zu können, ist daher das alleinige Abstimmen des Resonators nicht ausreichend, sondern auch das Verstärkungsprofil muss zu anderen Frequenzen verschoben werden.

Das Abstimmen durch Veränderung des Verstärkungsprofils hat jedoch den Nachteil, dass Modensprünge begünstigt werden. Dies liegt daran, dass sich das Maximum des Verstärkungsprofils von einer Resonatormode zur nächsten verschiebt. Die Modensprünge sind also bedingt durch die Modenstruktur des Laserresonators und können nur mit großem Aufwand unterdrückt werden. Zudem funktioniert diese Unterdrückung in der Praxis häufig nicht zuverlässig. Die Modensprünge führen jedoch zu Diskontinuitäten in der Frequenzabstimmung der Strahlungsquelle, was wiederum die Genauigkeit von Messsystemen mit derartigen Strahlungsquellen beinträchtigt.

Der vorliegenden Erfindung liegt daher die Aufgabe zugrunde, ein Verfahren und eine Vorrichtung bereitzustellen, welche ein zuverlässiges Abstimmen einer Frequenz einer abgestrahlten elektromagnetischen Strahlung über einen großen Frequenzbereich ermöglichen.

Diese Aufgabe wird erfindungsgemäß durch ein Verfahren zum Erzeugen einer elektromagnetischen Nutzstrahlung mit einer Nutzfrequenz gelöst, wobei das Verfahren die folgenden Schritte aufweist:
a) Erzeugen und Abstrahlen einer elektromagnetischen Pumpstrahlung mit einer Pumpfrequenz,
b) Einkoppeln der Pumpstrahlung in einen externen optischen Resonator mit einer abstimmbaren Resonanzfrequenz, wobei die Resonanzfrequenz im Wesentlichen zunächst gleich der Pumpfrequenz ist, sodass in dem Resonator eine elektromagnetische Resonatorstrahlung mit der Resonanzfrequenz oszilliert,
c) Ändern der Resonanzfrequenz des Resonators, sodass die Resonanzfrequenz der im Resonator oszillierenden elektromagnetischen Resonatorstrahlung über eine Abstimmbandbreite geändert wird, wobei die Pumpfrequenz der Änderung der Resonanzfrequenz nicht folgt, und
d) Auskoppeln der in dem Resonator oszillierenden elektromagnetischen Resonatorstrahlung als Nutzstrahlung mit einer von der Pumpfrequenz verschiedenen Nutzfrequenz,
wobei der Schritt c) zeitlich nach Schritt c) folgt.

Das erfindungsgemäße Verfahren bietet eine Lösung, eine elektromagnetische Nutzstrahlung mit einer von einer Pumpfrequenz verschiedenen Nutzfrequenz aus einer Pumpstrahlung zu erzeugen, ohne dass dafür ein Abstimmen der Pumpstrahlung erforderlich ist. Daher treten bei dem Abstimmen auch keine Modensprünge auf, die sonst zu einer unkontrollierten Erzeugung von Nutzstrahlung führen.

Das Erzeugen der elektromagnetischen Pumpstrahlung in Schritt a) des erfindungsgemäßen Verfahrens erfolgt mit herkömmlichen, aus dem Stand der Technik bekannten elektromagnetischen Strahlungsquellen, beispielsweise einem Laser. Die erzeugte und abgestrahlte Pumpstrahlung wird erfindungsgemäß in einen externen optischen Resonator eingekoppelt.

Damit die in Schritt a) erzeugte und abgestrahlte elektromagnetische Pumpstrahlung in dem externen optischen Resonator oszilliert, ist die Resonanzfrequenz des externen optischen Resonators zunächst im Wesentlichen gleich der Pumpfrequenz der elektromagnetischen Pumpstrahlung.

Nachdem die elektromagnetische Pumpstrahlung in den externen optischen Resonator eingekoppelt ist, oszilliert diese mit der Resonanzfrequenz des externen optischen Resonators und wird daher ab diesem Zeitpunkt als elektromagnetische Resonatorstrahlung bezeichnet.

Gemäß dem erfindungsgemäßen Verfahren wird nach dem Einkoppeln der Pumpstrahlung in den externen optischen Resonator die Resonanzfrequenz des externen optischen Resonators in einem an den Schritt b) anschließenden Schritt c) über eine Abstimmbandbreite verändert. D.h. das Einkoppeln der Pumpstrahlung in den externen optischen Resonator erfolgt zeitlich vor dem Ändern der Resonanzfrequenz des externen optischen Resonators, damit sichergestellt ist, dass zu Beginn der Änderung der Resonanzfrequenz bereits elektromagnetische Pumpstrahlung in den Resonator eingekoppelt wurde und in diesem als Resonatorstrahlung oszilliert.

Das Ändern der Resonanzfrequenz des externen optischen Resonators erfolgt adiabatisch, d.h. die Abstimmschritte, über welche die Resonanzfrequenz abgestimmt wird, und auch die Abstimmbandbreite, über welche die Resonanzfrequenz maximal abstimmbar ist, sind klein im Vergleich zu den am Verfahren beteiligten Frequenzen der elektromagnetischen Strahlung.

Erfindungsgemäß ist vorgesehen, dass das Ändern der Resonanzfrequenz zudem derart erfolgt, dass die Pumpfrequenz der elektromagnetischen Pumpstrahlung der Änderung der Resonanzfrequenz nicht folgt. D.h. das Erzeugen und Abstrahlen der elektromagnetischen Pumpstrahlung in Schritt a) erfolgt unabhängig von der in Schritt c) erfolgenden Änderung der Resonanzfrequenz.

Zumindest während des Änderns der Resonanzfrequenz in Schritt c) erfolgt also keine Rücckopplung der in dem Resonator oszillierenden elektromagnetischen Resonatorstrahlung in eine Strahlungsquelle der elektromagnetischen Pumpstrahlung.

Nachdem die Resonatorstrahlung in dem externen optischen Resonator auf die gewünschte Resonanzfrequenz abgestimmt wurde, wird die Resonatorstrahlung gemäß dem erfindungsgemäßen Verfahren aus dem externen optischen Resonator als Nutzstrahlung mit einer Nutzfrequenz ausgekoppelt. Die Nutzfrequenz der Nutzstrahlung wird in dem Abstimmprozess gemäß Schritt c) des erfindungsgemäßen Verfahrens festgelegt. Die Nutzfrequenz unterscheidet sich damit maximal um die Abstimmbandbreite von der Pumpfrequenz der elektromagnetischen Pumpstrahlung.

Sobald die Resonatorstrahlung den externen optischen Resonator verlassen hat, wird in dem Sinne der Erfindung von einer Nutzstrahlung gesprochen, die für darauffolgende Anwendungen, wie beispielsweise eine Abstandmessung, verwendet werden kann.

Das Erzeugen der elektromagnetischen Nutzstrahlung in einem von der Strahlungsquelle unabhängigen, externen optischen Resonator und der Ausschluss der Rückkopplung der abgestimmten Resonatorstrahlung oder der erzeugten Nutzstrahlung während der Änderung der Resonanzfrequenz gemäß der Erfindung bietet den Vorteil, dass die so erzeugte Nutzstrahlung unabhängig von den Eigenschaften der elektromagnetischen Strahlungsquelle ist, da das Abstimmen der Resonatorstrahlung und damit das Erzeugen der Nutzstrahlung unabhängig von der Strahlungsquelle erfolgt. Damit treten bei dem erfindungsgemäßen Verfahren auch keine Modensprünge auf, die bei einem Abstimmen des aktiven Mediums üblicherweise auftreten, da ein Abstimmen Strahlungsquelle für das erfindungsgemäße Verfahren nicht notwendig ist.

Als Folge ermöglicht das erfindungsgemäße Verfahren eine reproduzierbare und stabile Erzeugung elektromagnetischer Nutzstrahlung mit einer von der Pumpfrequenz der zur Erzeugung verwendeten Pumpstrahlung verschiedenen Nutzfrequenz. In dem externen optischen Resonator oszillierende Resonatorstrahlung wird immer reproduzierbar abgestimmt, da ein Sprung auf eine andere Mode während des Abstimmens der Resonanzfrequenz des externen optischen Resonators physikalisch unmöglich ist. Da während des Abstimmprozesses außerdem keine Rückkopplung in eine Strahlungsquelle der elektromagnetischen Pumpstrahlung erfolgt, ist eine Abstimmung über einen vergleichsweise großen Frequenzbereich modensprungfrei möglich, da das Abstimmen unabhängig von dem aktiven Medium der Strahlungsquelle erfolgt.

In einer Ausführungsform der Erfindung ist die Pumpfrequenz der elektromagnetischen Pumpstrahlung während des Einkoppelns der elektromagnetischen Pumpstrahlung in den externen optischen Resonator in Schritt b) konstant. Dies ist nur gewährleistet, wenn weder abgestimmte Resonatorstrahlung noch erzeugte Nutzstrahlung in die Strahlungsquelle der Pumpstrahlung rückgekoppelt werden.

In einer weiteren Ausführungsform der Erfindung ist nicht ausgeschlossen, dass während des Änderns der Resonanzfrequenz weiter Pumpstrahlung in den externen optischen Resonator eingekoppelt wird. Eine Rückkopplung der Resonatorstrahlung in die elektromagnetische Strahlungsquelle ist zu diesem Zeitpunkt jedoch ausgeschlossen.

In einer weiteren Ausführungsform der Erfindung wird das Einkoppeln der Pumpstrahlung in den externen optischen Resonator zeitlich vor Schritt c), also vor dem Ändern der Resonanzfrequenz, unterbrochen.

In einer Ausführungsform der Erfindung wird die Pumpfrequenz der in Schritt a) erzeugten Pumpstrahlung während des Einkoppelns der Pumpstrahlung in den externen optischen Resonator in Schritt b) durch eine Rückkopplung der Resonatorstrahlung in die elektromagnetische Strahlungsquelle auf die Resonanzfrequenz stabilisiert. Die Stabilisierung der Pumpfrequenz auf die Resonanzfrequenz beruht darauf, dass Pumpfrequenzen, die nicht der Resonanzfrequenz des externen optischen Resonators im Wesentlichen entsprechen, nicht in dem externen optischen Resonator oszillieren und damit bei einer Rückkopplung der Resonatorstrahlung in die elektromagnetische Strahlungsquelle auch nicht zu einer stimulierten Emission weiterer elektromagnetischer Pumpstrahlung beitragen. Durch die Rückkopplung wird folglich der Anteil der Strahlung in der Strahlungsquelle, welcher die Pumpfrequenz aufweist, die der Resonanzfrequenz im Wesentlichen entspricht, erhöht.

Wenn die Pumpfrequenz der elektromagnetischen Pumpstrahlung zu Beginn des erfindungsgemäßen Verfahrens auf die Resonanzfrequenz des externen optischen Resonators stabilisiert wird, bietet dies den Vorteil, dass mehr Leistung in den externen optischen Resonator eingekoppelt wird, damit mehr Leistung für den anschließenden Abstimmprozess im externen optischen Resonator zur Verfügung steht und damit auch Nutzstrahlung mit einer höheren Leistung aus dem externen optischen Resonator ausgekoppelt wird.

Alternativ oder gleichzeitig wird in einer weiteren Ausführungsform die Rückkopplung während des gesamten Schritts c) aktiv unterbrochen. D.h. während des Änderns der Resonanzfrequenz wird eine Rückkopplung der Resonatorstrahlung in eine elektromagnetische Strahlungsquelle, mit welcher die elektromagnetische Pumpstrahlung erzeugt wird, unterbunden. Mit anderen Worten eine Rückkopplung findet allenfalls ausschließlich während des Einkoppelns der Pumpstrahlung in den externen optischen Resonator statt, solange die Resonanzfrequenz noch nicht geändert wird. So wird auch bei Ausführungsformen, die eine Rückkopplung der Resonatorstrahlung in die elektromagnetische Strahlungsquelle vorsehen, erreicht, dass die Pumpfrequenz der Änderung der Resonanzfrequenz nicht folgt.

Wird eine Rückkopplung nicht aktiv unterbrochen, so führt eine Rückkopplung der Resonatorstrahlung, wenn die Änderung der Resonanzfrequenz des externen optischen Resonators die Bandbreite der elektromagnetischen Strahlungsquelle übersteigt, ebenfalls nicht mehr zu einer Beeinflussung der erzeugten Pumpstrahlung, da die Resonatorstrahlung die Resonanzbedingung der elektromagnetischen Strahlungsquelle nicht mehr erfüllt und damit nicht mehr zur Erzeugung der Pumpstrahlung beitragen kann. In diesem Fall kann von einer passiven Unterbrechung der Rückkopplung gesprochen werden.

In einer weiteren Ausführungsform ist das Erzeugen und Abstrahlen der elektromagnetischen Pumpstrahlung in Schritt a) grundsätzlich unabhängig von der Resonatorstrahlung oder der ausgekoppelten Nutzstrahlung. D.h. es erfolgt zu keinen Zeitpunkt des erfindungsgemäßen Verfahrens eine Rückkopplung der erzeugten Nutzstrahlung oder der im Resonator oszillierenden elektromagnetischen Resonatorstrahlung in eine Strahlungsquelle der elektromagnetischen Pumpstrahlung.

Das Ändern der Resonanzfrequenz in Schritt c) erfolgt in einer Ausführungsform kontinuierlich und in einer weiteren Ausführungsform schrittweise bzw. sprunghaft. Kontinuierlich bedeutet, dass die Resonanzfrequenzen, die während des Abstimmens durchlaufen werden, einen möglichst geringen Frequenzabstand aufweisen. Wird die Resonanzfrequenz hingegen sprunghaft geändert, führt dies dazu, dass nur bestimmte Resonanzfrequenzen mit einem festgelegten Frequenzabstand in dem externen optischen Resonator unterstützt werden, wobei der Abstand zwischen den von dem Resonator unterstützten Resonanzfrequenzen deutlich größer als bei einer kontinuierlichen Änderung ist. So ist durch das erfindungsgemäße Verfahren elektromagnetische Nutzstrahlung erzeugbar, die an verschiedene Anwendungssituationen angepasst werden kann. Für verschiedene Anwendungen, wie beispielsweise eine Abstandmessung, ist eine Nutzstrahlung mit einzelnen diskreten Frequenzen ausreichend, wohingegen eine spektroskopische Messung wie oben beschrieben eher eine kontinuierliche Frequenzverteilung der Nutzfrequenz erfordert.

In einer Ausführungsform erfolgt die Änderung der Resonanzfrequenz des externen optischen Resonators aufgrund einer Änderung der optischen Resonatorlänge des Resonators. Dies kann beispielsweise erreicht werden, indem der externe optische Resonator ein Resonatormaterial mit einem elektrooptischen Effekt aufweist. Wenn an ein solches Resonatormaterial eine externe Spannung angelegt wird, ändern sich die optischen Eigenschaften, insbesondere der Brechungsindex, des externen optischen Resonators und damit auch die optische Weglänge und die Resonanzfrequenz des externen optischen Resonators.

Solche externen Spannungsquellen sind leicht und kostengünstig verfügbar und ermöglichen eine genaue Änderung der optischen Resonatorlänge und damit auch eine genaue Abstimmung der im Resonator oszillierenden Resonatorstrahlung, die letztlich als Nutzstrahlung ausgekoppelt wird.

In einer weiteren Ausführungsform erfolgt die Änderung der Resonanzfrequenz primär durch einen linearen elektrooptischen Effekt, sodass die Änderung der Resonanzfrequenz durch nichtlineare elektrooptische Effekte vernachlässigbar klein ist. Auch dies dient der zuverlässigen und reproduzierbaren Abstimmung der Nutzfrequenz der Nutzstrahlung.

In einer weiteren Ausführungsform der Erfindung ist das Resonatormaterial ein nichtlineares Medium und/oder ein Volumenkristall, bevorzugt ein LiNbO₃-Kristall oder ein LiTAO₃-Kristall. Aufgrund der Nichtlinearität der Kristalle kann bereits bei einer kleinen Spannungsänderung eine vergleichsweise große Änderung der optischen Resonatorlänge erzielt werden. Dies ist von Vorteil, wenn die Resonanzfrequenz des externen optischen Resonators in möglichst kurzer Zeit über eine große Abstimmbandbreite abgestimmt werden soll.

In einer weiteren Ausführungsform erfolgt das Ändern der Resonanzfrequenz des Resonators in Schritt c) mittels einer zeitabhängigen Resonatorspannung, beispielsweise eine periodische Dreiecksspannung. So wird während des erfindungsgemäßen Verfahrens die optische Resonatorlänge zeitabhängig verändert und Nutzstrahlung mit einer Nutzfrequenz mit einer definierten zeitlichen Abhängigkeit erzeugt. Dies ist insbesondere bei Abstandmessungen von Vorteil.

In einer weiteren Ausführungsform des erfindungsgemäßen Verfahrens ist die Abstimmbandbreite in Schritt c) größer als eine Pumpfrequenzbandbreite der elektromagnetischen Pumpstrahlung. Das erfindungsgemäße Verfahren bietet damit die Möglichkeit, Nutzfrequenzen zur Verfügung zu stellen, die nicht ohnehin in der Pumpfrequenzbandbreite enthalten sind. In einer besonders bevorzugten Ausführungsform beträgt die Abstimmbandbreite in Schritt c) mindestens 100 GHz und bevorzugt mindestens 300 GHz.

In einer weiteren Ausführungsform erfolgt das Auskoppeln der elektromagnetischen Resonatorstrahlung als Nutzstrahlung in Schritt d) zeitgleich mit dem Ändern der Resonanzfrequenz des externen optischen Resonators in Schritt c). Dies führt dazu, dass permanent Resonatorstrahlung als Nutzstrahlung mit einer Nutzfrequenz ausgekoppelt wird, wobei die Nutzfrequenz je nach Zeitpunkt der Auskopplung variiert, da der Abstimmprozess weiter voranschreitet. Es wird also über die Dauer des Abstimmens der Resonanzfrequenz zeitlich nacheinander Nutzstrahlung mit einer Mehrzahl von Nutzfrequenzen ausgekoppelt, die innerhalb der Abstimmbandbreite des externen optischen Resonators liegen.

In einer Ausführungsform decken die Nutzfrequenzen, die zeitlich nacheinander erzeugt werden, ein kontinuierliches Frequenzspektrum innerhalb der Abstimmbandbreite ab. Dies ist beispielsweise bei spektroskopischen Messungen von Vorteil, da so während eines einzelnen Abstimmprozesses und damit anhand einer mit der erzeugten Nutzstrahlung erfolgten Messung die Frequenzantwort einer Probe über einen großen Frequenzbereich untersucht wird.

In einer weiteren Ausführungsform wird die Nutzstrahlung erst aus dem externen optischen Resonator ausgekoppelt, nachdem das Abstimmen der Resonanzfrequenz vollständig beendet ist und die Resonanzfrequenz einen vergebenen Zielwert erreicht hat. Damit wird nur Nutzstrahlung mit einer einzigen Nutzfrequenz ausgekoppelt, allerdings ist die Leistung dieser Nutzstrahlung höher, als wenn die Nutzstrahlung kontinuierlich während des Abstimmens ausgekoppelt wird. In einer Ausführungsform weist daher der externe Resonator einen Güteschalter auf, der so eingerichtet und angeordnet ist, dass Strahlung erst aus dem Resonator ausgekoppelt wird, wenn bei dem Abstimmen die Zielfrequenz erreicht wurde. Dies führt dazu, dass innerhalb kürzester Zeit eine Nutzstrahlung mit hoher Leistung aus dem externen optischen Resonator ausgekoppelt werden kann und damit die erzeugte Nutzstrahlung beispielsweise auch für die Untersuchung kurzlebiger Materialeigenschaften geeignet ist.

In einer weiteren Ausführungsform werden die Schritte b), c) und d) periodisch wiederholt. So kann in bestimmten zeitlichen Abständen, die von der Wiederholrate der Schritte b), c) und d) abhängen, eine elektromagnetische Nutzstrahlung mit einer bestimmten Nutzfrequenz zur Verfügung gestellt werden. Die bei dem erfindungsgemäßen Verfahren erzeugte Nutzstrahlung kann also als gepulste Strahlung bezeichnet werden, deren Repetitionsrate von der Wiederholrate des erfindungsgemäßen Verfahrens abhängt. Die zeitliche Dauer der Pulse hängt davon ab, ob bereits während des Abstimmens oder nur nach Abschluss des Abstimmens Nutzstrahlung ausgekoppelt wird.

In einer weiteren Ausführungsform des erfindungsgemäßen Verfahrens wird ein Teil der aus dem Resonator ausgekoppelten Nutzstrahlung mit einem Teil der Pumpstrahlung auf einer Messeinrichtung räumlich überlagert. Die bei der räumlichen Überlagerung der Pumpstrahlung und der Nutzstrahlung entstehende resultierende Schwingung weist einerseits eine Frequenz basierend auf der Summe aus Pumpfrequenz und Nutzfrequenz auf und andererseits eine Differenzfrequenz aus Pump- und Nutzfrequenz, die einer Amplitudenmodulation der resultierenden Schwingung entspricht. Der Betrag der Differenzfrequenz entspricht wiederum einer Schwebungsfrequenz, die gemessen werden kann. Ist der Wert der Pumpfrequenz bekannt, beispielsweise weil eine Strahlungsquelle mit einer bekannten Pumpfrequenz zum Einsatz kommt oder weil die Strahlungsquelle auf eine festgelegte Resonanzfrequenz stabilisiert wird, wird in einer Ausführungsform mithilfe der bestimmten Schwebungsfrequenz auf die Nutzfrequenz geschlossen. Dies bietet den Vorteil, dass die Nutzfrequenz, die für darauffolgende Anwendungen verwendet wird, bekannt ist und bei entsprechenden Auswertungen Berücksichtigung finden kann.

In einer weiteren Ausführungsform wird der durch die Schwebungsfrequenz bestimmte Ist-Wert der Nutzfrequenz einem Regelprozess zugeführt, in welchem der Ist-Wert der Nutzfrequenz auf einen gegebenen Sollwert der Nutzfrequenz eingeregelt wird. In einer weiteren Ausführungsform ist auch denkbar, dass direkt die Schwebungsfrequenz als Regelgröße verwendet wird, sodass eine Umrechnung auf die Nutzfrequenz entfallen kann. In einer Ausführungsform erfolgt die Regelung durch Einstellen der Resonanzfrequenz des externen optischen Resonators, insbesondere durch Einstellen einer am Resonator anliegenden Spannung, nach einem ersten Durchlaufen der Verfahrensschritte b), c) und d) anhand des ermittelten Ist-Wertes der Nutzfrequenz oder der Schwebungsfrequenz, sodass sich die im nächsten Durchlauf der Verfahrensschritte erzeugte Nutzfrequenz bzw. Schwebungsfrequenz dem Sollwert annähert. Dabei kann sich der Regelprozess auch über mehr als zwei Wiederholungen der Verfahrensschritte erstrecken.

Damit bietet das erfindungsgemäße Verfahren eine Möglichkeit zur Erzeugung einer besonders stabilen Nutzstrahlung, wie sie insbesondere für lang andauernde Messungen von Bedeutung ist. Es versteht sich, dass zu diesem Zweck eine entsprechende Steuerung vorgesehen ist, die auf die Änderung der Resonanzfrequenz in Schritt c) einwirkt abhängig von den Werten der Schwebungsfrequenz, die von dem Detektor übermittelt werden.

Die der Erfindung zugrunde liegende Aufgabe wird darüber hinaus von einer Vorrichtung zum Erzeugen einer elektromagnetischen Nutzstrahlung mit einer Nutzfrequenz gelöst, wobei die Vorrichtung eine elektromagnetischen Strahlungsquelle, die derart ausgestaltet ist, dass die elektromagnetische Strahlungsquelle in einem Betrieb der Vorrichtung elektromagnetische Pumpstrahlung mit einer Pumpfrequenz erzeugt und abstrahlt, einen externen optischen Resonator und eine Steuerung aufweist, wobei der Resonator derart angeordnet und ausgestaltet ist, dass der Resonator eine abstimmbare Resonanzfrequenz aufweist, dass in dem Betrieb der Vorrichtung die von der elektromagnetischen Strahlungsquelle abgestrahlte Pumpstrahlung in den Resonator eingekoppelt wird und dass in dem Betrieb der Vorrichtung die Nutzstrahlung aus dem Resonator ausgekoppelt wird, wobei die Steuerung derart wirksam mit der Pumpquellen und dem Resonator verbunden ist und derart eingerichtet ist, dass die Steuerung in dem Betrieb der Vorrichtung die Pumpfrequenz und/oder die Resonanzfrequenz so einstellt, dass die Resonanzfrequenz zunächst im Wesentlichen gleich der Pumpfrequenz ist, sodass in dem Resonator eine elektromagnetische Resonatorstrahlung zunächst mit der Resonanzfrequenz oszilliert und dann die Resonanzfrequenz und damit die Nutzfrequenz der Nutzstrahlung über eine Abstimmbandbreite ändert, und wobei die Vorrichtung derart ausgestaltet ist, dass die Pumpfrequenz einer Änderung der Resonanzfrequenz nicht folgt.

Soweit das Verfahren mit einer Vorrichtung gemäß dieser Erfindung ausgeführt wird, so weist diese die entsprechenden Einrichtungen hierfür auf. Insbesondere sind Ausführungsformen der Vorrichtung zum Ausführen der zuvor beschriebenen Ausführungsformen des Verfahrens geeignet.

Eine elektromagnetische Strahlungsquelle im Sinne der Erfindung ist insbesondere ein Laser, und besonders bevorzugt ein Diodenlaser. Es sind jedoch auch andere elektromagnetische Strahlungsquellen, beispielsweise breitbandigere Strahlungsquellen wie Leuchtdioden oder thermische Strahlungsquellen, denkbar.

Die elektromagnetische Strahlungsquelle erzeugt in einer Ausführungsform elektromagnetische Pumpstrahlung mit einer Pumpfrequenz im sichtbaren oder nahinfraroten Bereich, insbesondere zwischen 370 THz und 750 THz und besonders bevorzugt im Bereich um 475 THz.

Die erzeugte und abgestrahlte elektromagnetische Pumpstrahlung wird in einer Ausführungsform entweder über Lichtleiter, die dazu geeignet sind, die Pumpstrahlung möglichst verlustfrei zu führen, in den externen optischen Resonator eingekoppelt oder über Spiegel in den Resonator geführt.

In einer weiteren Ausführungsform ist der externe optische Resonator ein Ringresonator oder ein Flüstergalerieresonator, insbesondere ein monolithischer, auf interner Totalreflexion beruhender Ringresonator oder Flüstergalerieresonator. Derartige Resonatoren können besonders gut integriert werden und zeichnen sich durch eine geringe Dämpfung der in ihnen oszillierenden Strahlung aus.

In einer weiteren Ausführungsform weist die Vorrichtung weiterhin einen Schalter auf, wobei mit dem Schalter das Einkoppeln der Pumpstrahlung in den Resonator unterbrechbar ist, wobei die Steuerung derart wirksam mit dem Schalter verbunden ist und die Steuerung derart eingerichtet ist, dass der Schalter das Einkoppeln der Pumpstrahlung in den Resonator gestattet und dass der Schalter das Einkoppeln der Pumpstrahlung in den Resonator während des Abstimmens der Resonanzfrequenz unterbricht, sodass während des Abstimmens der Resonanzfrequenz ausschließlich die Nutzstrahlung aus dem Resonator ausgekoppelt wird. So wird sichergestellt, dass der darauffolgenden Anwendung nur elektromagnetische Strahlung mit der gewünschten Nutzfrequenz zugeführt wird und Messergebnisse nicht durch eventuell noch im Resonator vorhandene Pumpstrahlung verfälscht wird. Gleichzeitig verhindert der Schalter in einer Ausführungsform auch die Rückkopplung von Resonatorstrahlung in die Strahlungsquelle der Pumpstrahlung.

Das Einkoppeln der Pumpstrahlung in den Resonator wird in einer Ausführungsform durch elektrisches Schalten der elektromagnetischen Strahlungsquelle ermöglicht. Zu diesem Zweck ist in einer Ausführungsform ein Schalter zwischen der elektromagnetischen Strahlungsquelle und dem externen optischen Resonator angeordnet. Ein Schalter im Sinne der Erfindung kann beispielsweise ein Chopperrad oder eine andere Blende sein, die das Einkoppeln der Pumpstrahlung in der Resonator abhängig von ihrer Position unterbrechen. Es ist jedoch auch ein elektrooptischer oder akustooptischer Schalter denkbar, der je nach anliegender Spannung elektromagnetische Pumpstrahlung transmittieren lässt oder nicht. Der Vorteil solcher Schalter besteht in der guten Verfügbarkeit, den geringen Kosten und der hohen Genauigkeit bzw. kurzen Reaktionszeit. Insbesondere bei den heutzutage auftretenden hohen Produktionsgeschwindigkeiten müssen Messvorrichtungen beispielsweise zur Qualitätskontrolle ebenfalls entsprechend schnell arbeiten können.

Um den Schalter zwischen elektromagnetischer Strahlungsquelle und dem externen optischen Resonator zu steuern, kommt in einer Ausführungsform eine Rechteckspannung zum Einsatz, die an den Schalter angelegt wird. Es ist grundsätzlich jedoch auch denkbar, dass eine Spannungsversorgung der elektromagnetischen Strahlungsquelle selbst mit einer zeitlich variierenden Spannung, insbesondere einer Rechteckspannung beaufschlagt wird.

Generell bietet das schaltbare Einkoppeln der Pumpstrahlung in den externen optischen Resonator basierend auf einer Rechteckspannung den Vorteil, dass nahezu keine Übergangszustände vorhanden sind, in denen geringe Leistungen der Pumpstrahlung in den Resonator eingekoppelt werden. Etwaige Messelektronik darauffolgender Messungen, wie beispielsweise ein Lock-In-Verstärker, kann auf dieses Rechtecksignal synchronisiert werden, sodass beispielsweise Rauschen aus den Messdaten herausgefiltert wird.

In einer weiteren Ausführungsform ist der Schalter ein Mach-Zehnder-Interferometer mit zwei räumlich voneinander getrennten Interferometerausgängen, wobei das Mach-Zehnder-Interferometer derart angeordnet ist, dass in dem Betrieb der Vorrichtung die von der elektromagnetischen Strahlungsquelle abgestrahlte Pumpstrahlung in das Mach-Zehnder-Interferometer eintritt, und ausschließlich die aus einem ersten der zwei Interferometerausgänge austretende Pumpstrahlung in den Resonator eingekoppelt wird, wobei das Mach-Zehnder-Interferometer einen Phasenschieber aufweist, der derart angeordnet und steuerbar ist, dass in einem ersten Betriebszustand die Pumpstrahlung aus dem ersten der zwei Interferometerausgänge austritt und in einem zweiten Betriebszustand die Pumpstrahlung aus einem zweiten der zwei Interferometerausgänge austritt. Auf diese Weise wird die Einkopplung der Pumpstrahlung in den externen optischen Resonator ebenfalls unterbrochen.

In einer weiteren Ausführungsform ist auch denkbar, dass das Mach-Zehnder-Interferometer aus Glasfasern besteht, die die elektromagnetischen Strahlungen entsprechend leiten. Dies bietet den Vorteil, dass die erfindungsgemäße Vorrichtung eine hohe Anwendungssicherheit bietet, da Laserstrahlung nicht frei im Raum propagieren kann. Damit sind gesonderte Laserschutzeinrichtungen entbehrlich oder zumindest deutlich reduzierbar.

In einer weiteren Ausführungsform sind der externe optische Resonator und der Schalter der Vorrichtung oder die elektromagnetische Strahlungsquelle, der externe optische Resonator und der Schalter der Vorrichtung auf einem gemeinsamen Chip integriert. Dies bietet den Vorteil, dass die erfindungsgemäße Vorrichtung besonders kompakt ist. Möglichst kompakte Sensoren sind für viele Anwendungen erwünscht. Je weniger Komponenten in einer Vorrichtung verbaut sind, desto weniger Fehlerquellen existieren, sodass die erfindungsgemäße Vorrichtung den Vorteil bietet, kostengünstig eine stabil abstimmbare Quelle für elektromagnetische Nutzstrahlung zu bieten.

In einer weiteren Ausführungsform weist die Vorrichtung weiterhin einen Strahlteiler und eine Messeinrichtung auf, wobei der Strahlteiler und die Messeinrichtung derart angeordnet und eingerichtet sind, dass in dem Betrieb der Vorrichtung mit dem Strahlteiler ein Teil der aus dem Resonator ausgekoppelten Nutzstrahlung abgezweigt und auf die Messeinrichtung geleitet wird, wobei die Messeinrichtung derart angeordnet ist, dass in dem Betrieb der Vorrichtung ein Teil der Pumpstrahlung auf die Messeinrichtung geleitet wird, sodass die Nutzstrahlung und die Pumpstrahlung auf der Messeinrichtung räumlich überlagert sind und wobei mit der Messeinrichtung eine Schwebungsfrequenz zwischen der Pumpfrequenz und der Nutzfrequenz bestimmbar ist.

Durch die Bestimmung der Schwebungsfrequenz zwischen der Pumpfrequenz und der Nutzfrequenz wird bei bekannter Pumpfrequenz die Nutzfrequenz anhand der Schwebungsfrequenz ermittelt. Dies ermöglicht eine Überwachung der Nutzfrequenz bzw. der Wert der Nutzfrequenz kann für spätere Auswertungen herangezogen werden. Die Steuerung führt in einer Ausführungsform einen entsprechenden Regelprozess aus, bei welchem ein anhand der Schwebungsfrequenz ermittelter Ist-Wert der Nutzfrequenz auf einen Sollwert der Nutzfrequenz einregelt wird. Der Vorteil besteht, wie bereits im Hinblick auf das Verfahren beschrieben, in einer Nutzstrahlung mit einer stabilisierten Nutzfrequenz.

Das Abzweigen eines Teils der Pumpstrahlung für die räumliche Überlagerung in der Messeinrichtung erfolgt in einer weiteren Ausführungsform mit einem zweiten Strahlteiler. Der zweite Strahlteiler ist zwischen der elektromagnetischen Strahlungsquelle und dem externen optischen Resonator angeordnet, wobei der zweite Strahlteiler einen Teil der elektromagnetischen Pumpstrahlung in den externen optischen Resonator leitet und einen anderen Teil der elektromagnetischen Pumpstrahlung auf die Messeinrichtung, an welcher die elektromagnetische Pumpstrahlung mit der elektromagnetischen Nutzstrahlung räumlich überlagert wird.

In einer weiteren Ausführungsform weist der Resonator ein elektrooptisches Material auf, sodass eine optische Resonatorlänge des Resonators und damit die Resonanzfrequenz in Abhängigkeit von einer an das elektrooptische Material angelegten Spannung änderbar sind. Dabei ist die Steuerung derart mit dem elektrooptischen Material verbunden, dass die Steuerung in dem Betrieb der Vorrichtung die optische Resonatorlänge steuert. Die Änderung der optischen Resonatorlänge hängt unmittelbar mit der Abstimmbandbreite des externen optischen Resonators zusammen. Durch die Steuerung der optischen Resonatorlänge wird damit auch die Frequenz der ausgekoppelten Nutzstrahlung gesteuert. Dies erfolgt bei der erfindungsgemäßen Vorrichtung, wie im Hinblick auf das Verfahren beschrieben, vor allem reproduzierbar und zielgerichtet.

In einer weiteren Ausführungsform ist eine Abklingzeit des externen optischen Resonators zeitlich veränderbar. Bevorzugt beträgt die Abklingzeit des externen optischen Resonators mindestens 5 ns, besonders bevorzugt mindestens 50 ns. Somit ist gewährleistet, dass ausreichend Zeit für die Abstimmung der Resonanzfrequenz zur Verfügung steht, nachdem die elektromagnetische Pumpstrahlung in den externen optischen Resonator eingekoppelt wurde.

In einer weiteren Ausführungsform weist der Resonator einen Resonatoreingang und einen Resonatorausgang auf, wobei die Nutzstrahlung über den Resonatorausgang ausgekoppelt wird und wobei die elektromagnetische Strahlungsquelle ausschließlich mit dem Resonatoreingang derart wirksam verbunden ist, dass während des Betriebs der Vorrichtung ausschließlich Pumpstrahlung zwischen der elektromagnetischen Strahlungsquelle und dem externen optischen Resonator propagiert. So wird ermöglicht, dass keine Rückkopplung zwischen dem externen optischen Resonator und der elektromagnetischen Strahlungsquelle stattfindet. Die Pumpfrequenz der elektromagnetischen Pumpstrahlung folgt damit nicht der Änderung der Nutzfrequenz der elektromagnetischen Resonatorstrahlung, sodass das Erzeugen und Abstrahlen der elektromagnetischen Pumpstrahlung unabhängig von der Resonator- oder Nutzstrahlung erfolgt.

Weitere Vorteile, Merkmale und Anwendungsmöglichkeiten der vorliegenden Erfindung werden anhand der folgenden Beschreibung einer Ausführungsform sowie der dazugehörigen Figuren deutlich. Gleiche Bauteile sind dabei mit gleichen Bezugszeichen versehen.
- Figur 1: ist eine schematische Darstellung einer Ausführungsform der erfindungsgemäßen Vorrichtung.
- Figur 2: ist eine schematische Darstellung einer weiteren Ausführungsform der erfindungsgemäßen Vorrichtung.
- Figur 3a: ist eine schematische Darstellung einer weiteren Ausführungsform der erfindungsgemäßen Vorrichtung in einem ersten Schaltzustand und
- Figur 3b: ist eine schematische Darstellung der Ausführungsform aus Figur 3a in einem zweiten Schaltzustand.

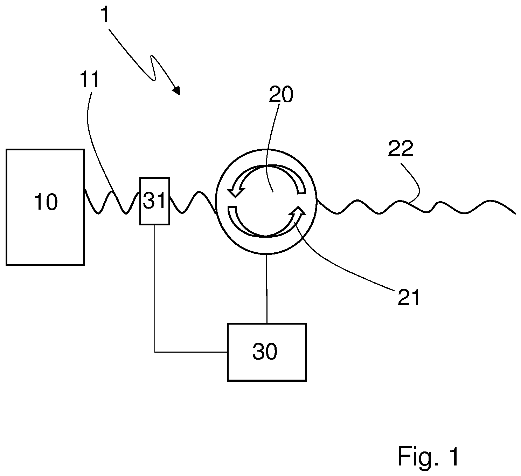

Die in Figur 1 gezeigte Ausführungsform der erfindungsgemäßen Vorrichtung 1 weist eine elektromagnetische Strahlungsquelle 10 in Form eines Diodenlasers auf, der eine elektromagnetische Pumpstrahlung 11 mit einer Pumpfrequenz von 475 THz erzeugt und abstrahlt. Die elektromagnetische Pumpstrahlung 11 wird in einen externen optischen Resonator 20 eingekoppelt, wenn ein Schalter 31 die Einkopplung der elektromagnetischen Pumpstrahlung 11 nicht unterbricht.

Sowohl der Schalter 31 als auch der externe optische Resonator 20 werden über eine Steuerung 30 gesteuert, die einerseits die Einkopplung der elektromagnetischen Pumpstrahlung 11 in den externen optischen Resonator 20 mit Hilfe des Schalters 31 unterbricht und außerdem die Resonanzfrequenz des externen optischen Resonators 20 ändert. Die Steuerung 30 stellt zunächst die Resonanzfrequenz des externen optischen Resonators 20 so ein, dass sie im Wesentlichen gleich der Pumpfrequenz der elektromagnetischen Pumpstrahlung 11 ist. Nachdem elektromagnetische Pumpstrahlung 11 in den externen optischen Resonator 20 eingekoppelt wurde, verändert die Steuerung 30 die Resonanzfrequenz des externen optischen Resonators 20 über eine Abstimmbandbreite, die größer ist als eine Pumpfrequenzbandbreite der elektromagnetischen Pumpstrahlung 11. Die Abstimmbandbreite beträgt in der gezeigten Ausführungsform 300 GHz.

Bei dem externen optischen Resonator 20 handelt es sich um einen monolithischen, auf interner Totalreflexion beruhenden Flüstergalerieresonator. Bei dem Resonatormaterial handelt es sich um einen LiNbO₃-Kristall, an welchen zum Ändern der Resonanzfrequenz eine elektrische Spannung angelegt wird. Durch das Anlegen der elektrischen Spannung mit Hilfe der Steuerung 30 erfolgt eine Änderung der optischen Weglänge des externen optischen Resonators 20, wodurch die Resonanzfrequenz des externen optischen Resonators 20 ebenfalls geändert wird.

Das Ändern der Resonanzfrequenz des externen optischen Resonators 20 erfolgt zeitlich nach dem Einkoppeln der elektromagnetischen Pumpstrahlung 11. Während des Änderns der Resonanzfrequenz des externen optischen Resonators 20 wird jedoch weiterhin elektromagnetische Pumpstrahlung 11 in den externen optischen Resonator 20 eingekoppelt.

Nachdem die Resonanzfrequenz der Resonatorstrahlung 21 in dem externen optischen Resonator 20 abgestimmt wurde, wird die Resonatorstrahlung 21 als Nutzstrahlung 22 mit einer Nutzfrequenz aus dem externen optischen Resonator 20 ausgekoppelt.

Bei der in Figur 1 gezeigten Ausführungsform der Vorrichtung 1 wird elektromagnetische Nutzstrahlung 22 kontinuierlich ausgekoppelt, sodass über die Dauer des Abstimmens Nutzstrahlung 22 mit je nach Zeitpunkt des Auskoppelns unterschiedlichen Nutzfrequenzen erzeugt wird, die innerhalb der Abstimmbandbreite von 300 GHz liegen.

Die Nutzstrahlung 22 wird nach der Auskopplung aus dem externen optischen Resonator 20 in eine Glasfaser eingekoppelt (nicht gezeigt) und so zu ihrer bestimmungsgemäßen Verwendung geführt.

Nachdem ein Abstimmprozess durchgeführt wurde und elektromagnetische Nutzstrahlung 22 vollständig ausgekoppelt wurde, beginnt der Prozess erneut, d. h. elektromagnetische Pumpstrahlung 11, die von dem Laser 10 erzeugt wird, wird in den externen optischen Resonator 20 erneut eingekoppelt, der Abstimmprozess der Resonanzfrequenz des externen optischen Resonators 20 beginnt und Resonatorstrahlung 21 wird als Nutzstrahlung 22 ausgekoppelt.

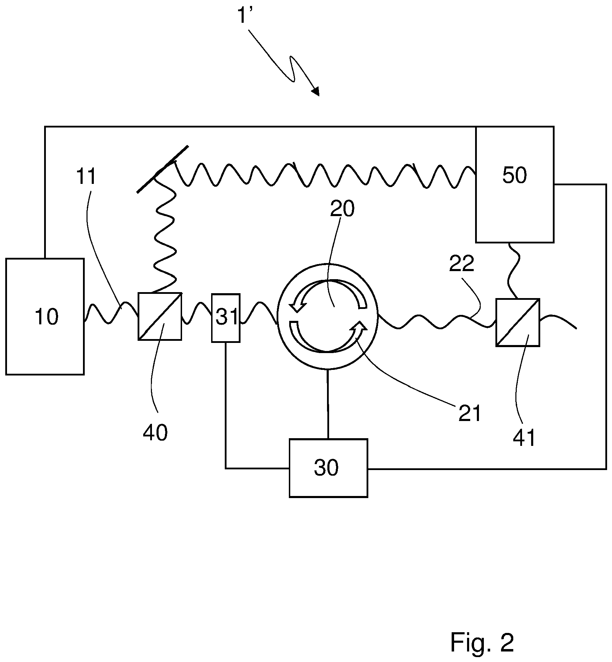

Figur 2 zeigt eine weitere Ausführungsform der erfindungsgemäßen Vorrichtung 1'. Der externe optische Resonator 20 ist bei der in Figur 2 gezeigten Ausführungsform ein Ringresonator und besteht aus einem LiTaO₃-Kristall.

Bei der in Figur 2 gezeigten Ausführungsform der Vorrichtung 1' wird die von dem Laser 10 erzeugte elektromagnetische Pumpstrahlung 11 zunächst auf einen ersten Strahlteiler 40 geleitet, der die elektromagnetische Pumpstrahlung 11 auf zwei Pfade aufteilt. Ein Pfad der elektromagnetischen Pumpstrahlung 11 wird wie in der zuvor diskutierten Ausführungsform aus Figur 1 über einen Schalter 31 in den externen optischen Resonator 20 eingekoppelt. Die eingekoppelte elektromagnetische Pumpstrahlung 11 oszilliert wie zuvor als Resonatorstrahlung 21 in dem externen optischen Resonator 20 und die Resonatorstrahlung 21 wird in dem externen optischen Resonator 20 abgestimmt, sodass eine elektromagnetische Nutzstrahlung 22 erzeugt wird.

Im Gegensatz zu der in Figur 1 gezeigten Ausführungsform, erfolgt das Auskoppeln der Nutzstrahlung 22 aus dem externen optischen Resonator 20 jedoch erst nachdem die Resonanzfrequenz über die vollständige Abstimmbandbreite geändert wurde. D.h. bei dem in Figur 2 gezeigten Ausführungsbeispiel weist die Nutzstrahlung 22 nur eine Nutzfrequenz auf.

Der zweite Pfad der elektromagnetischen Pumpstrahlung 11 wird auf eine Messeinrichtung 50 gelenkt, genauso wie ein zweiter Teil der elektromagnetischen Nutzstrahlung 22, der in einem zweiten Strahlteiler 41, der nach dem externen optischen Resonator 20 angeordnet ist, abgezweigt wird. Die elektromagnetische Pumpstrahlung 11 und die elektromagnetische Nutzstrahlung 20 werden in der Messeinrichtung 50 räumlich überlagert.

Aus der räumlichen Überlagerung bestimmt die Messeinrichtung 50 eine Schwebungsfrequenz, mit Hilfe welcher bei bekannter Pumpfrequenz die Nutzfrequenz der Nutzstrahlung 22 ausgewertet wird. Zu diesem Zweck ist die Messeinrichtung 50 derart mit dem Laser 10 verbunden, dass der Wert der Pumpfrequenz an die Messeinrichtung 50 übergeben wird.

Die Messeinrichtung 50 ist außerdem derart mit der Steuerung 30 verbunden, dass die Messeinrichtung 50 den ermittelten Ist-Wert der Nutzfrequenz an die Steuerung 30 übergibt und die Steuerung 30 den Ist-Wert der Nutzfrequenz mit einem Sollwert der Nutzfrequenz abgleicht und die Änderung der Resonanzfrequenz in dem externen optischen Resonator 20 derart beeinflusst, dass der Ist-Wert der Nutzfrequenz an den Sollwert der Nutzfrequenz angepasst wird.

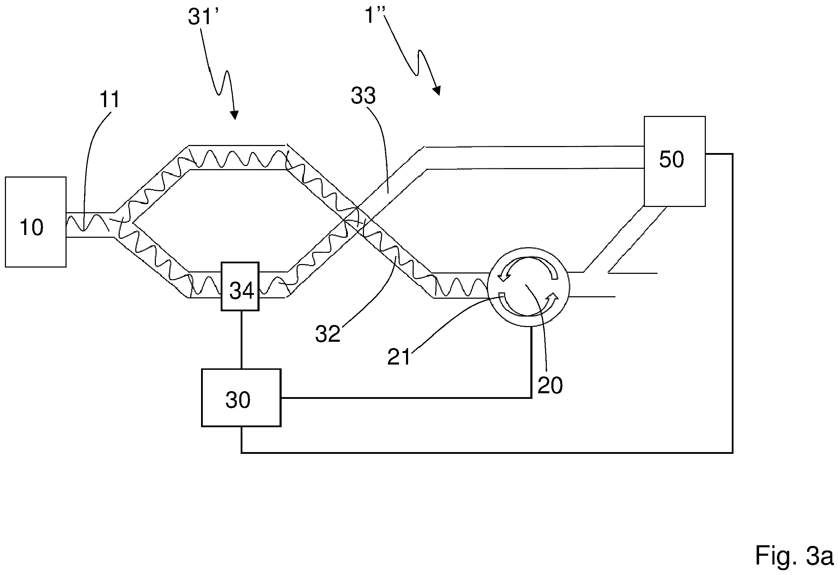

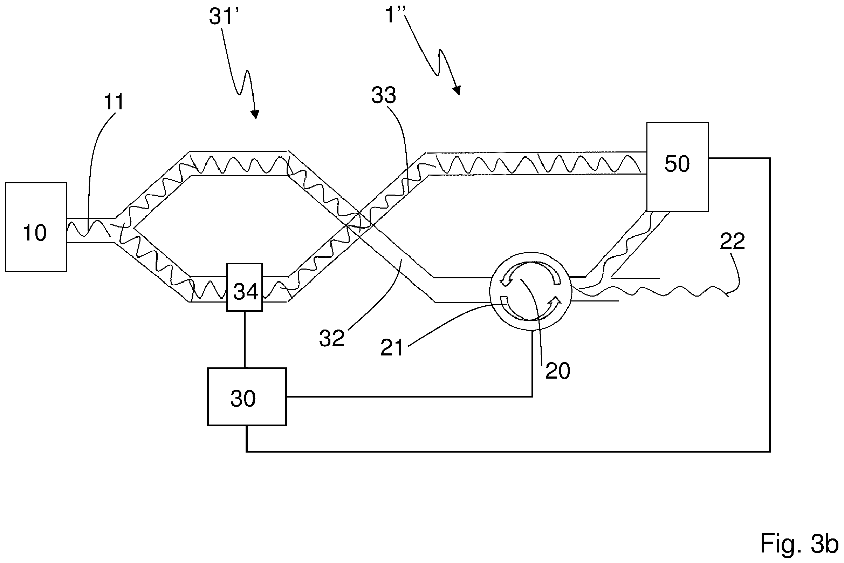

Die Figuren 3a und 3b zeigen eine Ausführungsform der erfindungsgemäßen Vorrichtung 1", bei welcher der Schalter von einem Mach-Zehnder-Interferometer 31' mit zwei Interferometerarmen und zwei Interferometerausgängen 32, 33 gebildet wird. Die elektromagnetische Pumpstrahlung 11 wird in diesem Ausführungsbeispiel zunächst auf beide Interferometerarme aufgeteilt.

Ein erster Interferometerausgang 32 ist mit dem externen optischen Resonator 20 verbunden, der zweite Interferometerausgang 33 mit der Messeinrichtung 50.

Mit Hilfe der Steuerung 30 wird ein Phasenschieber 34 angesteuert, der die Phasenbedigungen der elektromagnetischen Pumpstrahlung 11 in einem der Interferometerarme im Vergleich zu der Phase der elektromagnetischen Pumpstrahlung in dem anderen Interferometerarm derart verändert, dass entweder elektromagnetische Pumpstrahlung über den ersten 32 der beiden Interferometerausgänge 32, 33 ausgekoppelt wird oder über den zweiten 33 der beiden Interferometerausgänge 32, 33, sodass jeweils nur einer der zwei Interferometerausgänge 32, 33 mit elektromagnetischer Pumpstrahlung 11 versorgt wird.

Während der sogenannten Füllphase, die in Figur 3a dargestellt ist, wird elektromagnetische Pumpstrahlung 11, die von dem Laser 10 erzeugt wurde, über den ersten Interferometerausgang 32 in den externen optischen Resonator 20 eingekoppelt. Die elektromagnetische Pumpstrahlung 11 oszilliert in dem externen optischen Resonator 20 als Resonatorstrahlung 21.

Der Abstimmprozess im externen optischen Resonator 20 erfolgt analog zu der in Figur 2 gezeigten Ausführungsform. Ist die Einkopplung der elektromagnetischen Pumpstrahlung 11 in den externen optischen Resonator ausreichend, so beendet die Steuerung 30 über den Phasenschieber 34 die Auskopplung der elektromagnetischen Pumpstrahlung 11 über den ersten Interferometerausgang 32 und koppelt die elektromagnetische Pumpstrahlung 11 nun über den zweiten Interferometerausgang 33 aus. Während dieser sogenannten Nutzphase, die in Figur 3b dargestellt ist, wird also keine elektromagnetische Pumpstrahlung 11 in den externen optischen Resonator 20 eingekoppelt.

Während der Nutzphase wird die elektromagnetische Pumpstrahlung 11 über den zweiten Interferometerausgang 33 auf die Messeinrichtung 50 gelenkt. Zudem wird ein Teil der erzeugten elektromagnetischen Nutzstrahlung 22 ebenfalls auf die Messeinrichtung 50 gelenkt.

Wie bei dem in Figur 2 gezeigten Ausführungsbeispiel ermittelt die Messeinrichtung 50 aus der Überlagerung der elektromagnetischen Pumpstrahlung 11 und der elektromagnetischen Nutzstrahlung 22 eine Schwebungsfrequenz, woraus wiederum bei bekannter Pumpfrequenz die Nutzfrequenz der Nutzstrahlung 22 ausgewertet wird. Der Regelprozess erfolgt analog zu dem in Figur 2 gezeigten Ausführungsbeispiel.

Für Zwecke der ursprünglichen Offenbarung wird darauf hingewiesen, dass sämtliche Merkmale, wie sie sich aus der vorliegenden Beschreibung, der Zeichnung und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in der Zeichnung und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus der Zeichnung, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen

- 1,1', 1": Vorrichtung
- 10: elektromagnetische Strahlungsquelle
- 11: elektromagnetische Pumpstrahlung
- 20: externer optischer Resonator
- 21: Resonatorstrahlung
- 22: Nutzstrahlung
- 30: Steuerung
- 31: Schalter
- 31': Mach-Zehnder-Interferometer
- 32: erster Interferometerausgang
- 33: zweiter Interferometerausgang
- 34: externe Spannungsquelle
- 40: erster Strahlteiler
- 41: zweiter Strahlteiler
- 50: Messeinrichtung

## Patentansprüche

1. Verfahren zum Erzeugen einer elektromagnetischen Nutzstrahlung (22) mit einer Nutzfrequenz mit den Schritten:
a) Erzeugen und Abstrahlen einer elektromagnetischen Pumpstrahlung (11) mit einer Pumpfrequenz,
b) Einkoppeln der Pumpstrahlung (11) in einen externen optischen Resonator (20) mit einer abstimmbaren Resonanzfrequenz, wobei die Resonanzfrequenz im Wesentlichen zunächst gleich der Pumpfrequenz ist, so dass in dem Resonator (20) eine elektromagnetische Resonatorstrahlung (21) mit der Resonanzfrequenz oszilliert,
c) Ändern der Resonanzfrequenz des Resonators (20), so dass die Resonanzfrequenz der im Resonator (20) oszillierenden elektromagnetischen Resonatorstrahlung (21) über eine Abstimmbandbreite geändert wird, wobei die Pumpfrequenz der Änderung der Resonanzfrequenz nicht folgt, und
d) Auskoppeln der in dem Resonator (20) oszillierenden elektromagnetischen Resonatorstrahlung (21) als Nutzstrahlung (22) mit einer von der Pumpfrequenz verschiedenen Nutzfrequenz,
wobei der Schritt c) zeitlich nach Schritt b) folgt.

2. Verfahren nach Anspruch 1, wobei die Schritte c) und d) gleichzeitig ausgeführt werden oder Schritt d) zeitlich nach Schritt c) ausgeführt wird.

3. Verfahren nach Anspruch 1 oder 2, wobei die Schritte b), c) und d) periodisch wiederholt werden.

4. Verfahren nach einem der vorhergehenden Ansprüche, wobei in Schritt c) die Abstimmbandbreite größer ist als eine Pumpfrequenzbandbreite der elektromagnetischen Pumpstrahlung (11).

5. Verfahren nach einem der vorhergehenden Ansprüche, wobei während des Schrittes c) das Einkoppeln der Pumpstrahlung (11) in den Resonator (20) unterbrochen wird.

6. Verfahren nach einem der vorhergehenden Ansprüche, wobei ein Teil der aus dem Resonator (20) ausgekoppelten Nutzstrahlung (22) mit einem Teil der Pumpstrahlung (11) auf einer Messeinrichtung (50) überlagert wird und eine Schwebungsfrequenz zwischen der Pumpfrequenz und der Nutzfrequenz bestimmtwird.

7. Verfahren nach dem vorhergehenden Anspruch, wobei ein Ist-Wert der Schwebungsfrequenz oder ein über die Schwebungsfrequenz bestimmter Ist-Wert der Nutzfrequenz in einem Regelprozess durch Regelung der Resonanzfrequenz auf einen gegebenen Sollwert der Schwebungsfrequenz oder der Nutzfrequenz eingeregelt wird.

8. Verfahren nach einem der vorhergehenden Ansprüche, wobei die Pumpfrequenz der in Schritt a) erzeugten Pumpstrahlung (11) während des Einkoppelns der Pumpstrahlung (11) in den externen optischen Resonator (20) in Schritt b) durch eine Rückkopplung der Resonatorstrahlung (21) stabilisiert wird und wobei vorzugsweise die Rückkopplung während des gesamten Schritts c) unterbrochen wird.

9. Vorrichtung (1, 1', 1") zum Erzeugen einer elektromagnetischen Nutzstrahlung (22) mit einer Nutzfrequenz, wobei die Vorrichtung (1, 1', 1") aufweist
eine elektromagnetische Strahlungsquelle (10), die derart ausgestaltet ist, dass die elektromagnetische Strahlungsquelle (10) in einem Betrieb der Vorrichtung (1, 1', 1") elektromagnetische Pumpstrahlung (11) mit einer Pumpfrequenz erzeugt und abstrahlt,
einen externen optischen Resonator (20) und
eine Steuerung (30),
wobei der Resonator (20) derart angeordnet und ausgestaltet ist,
dass der Resonator (20) eine abstimmbare Resonanzfrequenz aufweist, dass in dem Betrieb der Vorrichtung (1, 1', 1") die von der elektromagnetischen Strahlungsquelle (10) abgestrahlte Pumpstrahlung (1) in den Resonator (20) eingekoppelt wird und
dass in dem Betrieb der Vorrichtung (1, 1', 1") die Nutzstrahlung (22) aus dem Resonator (20) ausgekoppelt wird,
wobei die Steuerung (30) derart wirksam mit der elektromagnetischen Strahlungsquelle (10) und dem Resonator (20) verbunden ist und derart eingerichtet ist,
dass die Steuerung (30) in dem Betrieb der Vorrichtung (1, 1', 1") die Pumpfrequenz und/oder die Resonanzfrequenz so einstellt, dass die Resonanzfrequenz zunächst im Wesentlichen gleich der Pumpfrequenz ist, so dass in dem Resonator (20) eine elektromagnetische Resonatorstrahlung (21) zunächst mit der Resonanzfrequenz oszilliert und dann die Resonanzfrequenz und damit die Nutzfrequenz der Nutzstrahlung (22) über eine Abstimmbandbreite ändert, und
wobei die Vorrichtung (1, 1', 1") derart ausgestaltet ist, dass die Pumpfrequenz einer Änderung der Resonanzfrequenz nicht folgt.

10. Vorrichtung (1, 1', 1") nach dem vorhergehenden Anspruch, wobei die Vorrichtung (1, 1', 1") weiterhin einen Schalter (31) aufweist, wobei mit dem Schalter (31) das Einkoppeln der Pumpstrahlung (11) in den Resonator (20) unterbrechbar ist, wobei die Steuerung (30) derart wirksam mit dem Schalter (31) verbunden ist und die Steuerung (30) derart eingerichtet ist, dass der Schalter (31) das Einkoppeln der Pumpstrahlung (11) in den Resonator (20) gestattet und dass der Schalter (31) das Einkoppeln der Pumpstrahlung (11) in den Resonator (20) während des Änderns der Resonanzfrequenz unterbricht, sodass während des Änderns der Resonanzfrequenz ausschließlich die Nutzstrahlung (22) aus dem Resonator ausgekoppelt wird.

11. Vorrichtung (1, 1', 1") nach einem der Ansprüche 9 oder 10, wobei der Schalter ein Mach-Zehnder-Interferometer (31') mit zwei räumlich voneinander getrennten Interferometerausgängen (32, 33) umfasst, wobei das Mach-Zehnder-Interferometer (31') derart angeordnet ist, dass in dem Betrieb der Vorrichtung (1, 1', 1") die von der elektromagnetischen Strahlungsquelle (10) abgestrahlte Pumpstrahlung (11) in das Mach-Zehnder-Interferometer (31') eintritt, und ausschließlich die aus einem ersten (32) der zwei Interferometerausgänge (32, 33) austretende Pumpstrahlung (11) in den Resonator eingekoppelt wird, wobei das Mach-Zehnder-Interferometer (31') einen Phasenschieber (34) aufweist, der derart angeordnet und steuerbar ist, dass in einem ersten Betriebszustand die Pumpstrahlung (11) aus dem ersten (32) der zwei Interferometerausgänge (32, 33) austritt und in einem zweiten Betriebszustand die Pumpstrahlung (11) aus einem zweiten (33) der zwei Interferometerausgänge (32, 33) austritt.

12. Vorrichtung (1, 1', 1") nach einem der Ansprüche 9 bis 11, wobei die Vorrichtung (1, 1', 1") weiterhin einen Strahlteiler (41) und eine Messeinrichtung (50) aufweist, wobei der Strahlteiler (41) und die Messeinrichtung (50) derart angeordnet und eingerichtet sind, dass in dem Betrieb der Vorrichtung (1, 1', 1") mit dem Strahlteiler (41) ein Teil der aus dem Resonator (20) ausgekoppelten Nutzstrahlung (22) abgezweigt und auf die Messeinrichtung (50) geleitet wird, wobei die Messeinrichtung (50) derart angeordnet ist, dass in dem Betrieb der Vorrichtung (1, 1', 1") ein Teil der Pumpstrahlung (11) auf die Messeinrichtung (50) geleitet wird, so dass die Nutzstrahlung (22) und die Pumpstrahlung (11) auf der Messeinrichtung (50) räumlich überlagert sind, und wobei mit der Messeinrichtung (50) eine Schwebungsfrequenz zwischen der Pumpfrequenz und der Nutzfrequenz bestimmbar ist.

13. Vorrichtung (1, 1', 1") nach einem der Ansprüche 9 bis 12, wobei der Resonator (20) ein elektrooptisches Material aufweist, so dass eine optische Resonatorlänge des Resonators und damit die Resonanzfrequenz in Abhängigkeit von einer an das elektrooptische Material angelegten Spannung änderbar ist, und wobei die Steuerung (30) derart mit dem elektrooptischen Material verbunden ist, dass die Steuerung (30) in dem Betrieb der Vorrichtung (1, 1', 1") die optische Resonatorlänge steuert.

14. Vorrichtung (1, 1', 1") nach einem der Ansprüche 9 bis 13, wobei der externe optische Resonator (20) ein Ringresonator oder ein Flüstergalerieresonator, insbesondere ein monolithischer, auf interner Totalreflexion beruhender Ringresonator oder Flüstergalerieresonator, ist.

15. Vorrichtung (1, 1', 1") nach einem der Ansprüche 9 bis 14, wobei der externe optische Resonator (20) und der Schalter (31, 31') der Vorrichtung oder die elektromagnetische Strahlungsquelle (10), der externe optische Resonator (20) und der Schalter (31, 31') der Vorrichtung (1, 1', 1") auf einem gemeinsamen Chip integriert sind.
